# EUROPEAN PATENT APPLICATION

(11) **EP 4 407 783 A1**
(43) Date of publication of application: **31.07.2024**
(21) Application number: 23745852.6
(22) Date of filing: 06.01.2023
(51) Int. Cl.: H01M 50/574

(54) **SAFETY STRUCTURE, BATTERY AND ELECTRIC DEVICE**

(30) Priority: 28.01.2022 CN 202220239736 U
(71) Applicant: Contemporary Amperex Technology Co., Limited, Ningde, Fujian 352100 (CN)
(72) Inventor: CHEN, Shengwang, Ningde, Fujian 352100 (CN); ZHOU, Wenlin, Ningde, Fujian 352100 (CN); GUO, Zhijun, Ningde, Fujian 352100 (CN)
(74) Representative: Ziebig Hengelhaupt Intellectual Property Attorneys Patentanwaltskanzlei PartGmbB
(86) International application number: PCT/CN2023/070953
(87) International publication number: WO 2023/142967

(57) **Abstract**

This application relates to a safety mechanism, a battery, and an electric apparatus. The safety mechanism includes a connecting piece and an expanding layer. The connecting piece includes a first connecting portion, a fusing portion, and a second connecting portion that are connected in sequence. The expanding layer is disposed on a side of the first connecting portion or the second connecting portion in a first direction and located at a position of the first connecting portion or the second connecting portion close to the fusing portion. The first direction is a thickness direction of the connecting piece. In the foregoing safety mechanism, the expanding layer is disposed on the side of the first connecting portion or second connecting portion of the connecting piece close to the fusing portion. In this way, when the fusing portion of the connecting piece fuses, the expanding layer expands to exert a thrust on the connecting portion on which the expanding layer is located, pushing the connecting portion to a position not coplanar with the other connecting portion. This increases a distance between the first connecting portion and the second connecting portion, and makes it difficult to puncture the connecting piece, thereby improving use safety.

## Description

### CROSS-REFERENCE TO RELATED APPLICATIONS

This application claims priority to Chinese Patent Application No. CN202220239736.4, filed on January 28, 2022 and entitled "SAFETY MECHANISM, BATTERY, AND ELECTRIC APPARATUS", which is incorporated herein by reference in its entirety.

### TECHNICAL FIELD

This application relates to the field of battery technologies, and in particular, to a safety mechanism, a battery, and an electric apparatus.

### BACKGROUND

With increasingly wide use of batteries in people's daily life, use safety of batteries has become a growing concern. In view of this, a safety mechanism is typically disposed inside a battery. When the battery experiences a large current due to faults such as short circuit, the safety mechanism immediately fuses to cut off the circuit connection, avoiding safety accidents.

In the related art, when the safety mechanism fuses, the high voltage of the battery cell in the battery still applies to two ends of the safety mechanism. When the two ends of the safety mechanism are too close, the safety mechanism may undergo high-voltage breakdown to cause fire, posing certain safety hazards.

### SUMMARY

Based on this, it is necessary to provide a safety mechanism, a battery, and an electric apparatus to solve the problem that when two ends of the safety mechanism are too close, the safety mechanism may undergo high-voltage breakdown to cause fire, posing certain safety hazards.

According to an aspect of this application, embodiments of the application provide a safety mechanism, including a connecting piece including a first connecting portion, a fusing portion, and a second connecting portion that are connected in sequence; and an expanding layer disposed on a side of the first connecting portion or the second connecting portion in a first direction and located at a position of the first connecting portion or the second connecting portion close to the fusing portion; where the first direction is a thickness direction of the connecting piece.

In the foregoing safety mechanism, the expanding layer is disposed on the side of the first connecting portion or second connecting portion of the connecting piece close to the fusing portion. In this way, when the fusing portion of the connecting piece fuses, the expanding layer expands to exert a thrust on the connecting portion on which the expanding layer is located, pushing the connecting portion to a position not coplanar with the other connecting portion. This increases a distance between the first connecting portion and the second connecting portion, and makes it difficult for the connecting piece to undergo breakdown, thereby improving use safety.

In one of the embodiments, the expanding layer is configured to be capable of increasing in volume in response to absorption of fluid. Such a design allows the expanding layer to absorb fluid to expand. When the safety mechanism is applied in a battery, the expanding layer can absorb an electrolyte inside the battery to increase in volume and expand, resulting in more convenient application and more timely expansion of the expanding layer.

In one of the embodiments, a projection of the expanding layer on a surface of the connecting piece in the first direction is entirely located in the connecting piece. The projection of the expanding layer on the surface of the connecting piece in the first direction is entirely located in the connecting piece, such that the entire expanding layer is supported by the connecting piece, and when the expanding layer expands, the thrust it exerts on the connecting piece is more uniform.

In one of the embodiments, a minimum distance between the expanding layer and the fusing portion is not less than 1 mm. Such a design leaves a certain distance between the expanding layer and the fusing portion of the connecting piece, preventing the fusing portion after fusing from affecting normal use of the expanding layer.

In one of the embodiments, thickness of the expanding layer in the first direction is not less than 0.2 mm. The thickness of the expanding layer being set to be not less than 0.2 mm allows the expanding layer to expand sufficiently to push the connecting portion after expanding, improving use effects of the expanding layer.

In one of the embodiments, size of the expanding layer in a second direction is not less than 5 mm; and/or size of the expanding layer in a third direction is not less than 5 mm; where the second direction and the third direction intersect with each other and are both perpendicular to the first direction. Such a design allows the expanding layer to maintain sufficient contact area with the connecting portion in both the second direction and the third direction, ensuring that the expanding layer can push the connecting portion to the desired position after expanding.

In one of the embodiments, the expanding layer includes an expanding glue layer capable of absorbing fluid. The expanding layer being made using the expanding glue layer capable of absorbing fluid facilitates processing and shaping of the expanding layer, reducing manufacturing costs of the expanding layer.

According to another aspect of this application, the embodiments of this application provide a battery including a battery cell; a top cover disposed opposite and spaced apart from the battery cell; and the foregoing safety mechanism disposed between the battery cell and the top cover, where one of the first connecting portion and the second connecting portion is connected to the battery cell, and the other of the first connecting portion and the second connecting portion is connected to the top cover.

In the foregoing battery, because the foregoing safety mechanism is disposed between the battery cell and the top cover, when the fusing portion of the connecting piece fuses, the expanding layer expands to exert a thrust on the connecting portion on which the expanding layer is located, pushing the connecting portion to the position not coplanar with the other connecting portion. This increases the distance between the first connecting portion and the second connecting portion, and makes it difficult for the connecting piece to undergo breakdown, thereby improving the use safety.

In one of the embodiments, a tab is provided on a side of the battery cell facing the top cover, and the first connecting portion is connected to the battery cell via the tab; and the expanding layer is disposed on the first connecting portion, the expanding layer is located between the first connecting portion and the top cover, and the second connecting portion is connected to the top cover. Alternatively, a tab is provided on a side of the battery cell facing the top cover, and the second connecting portion is connected to the battery cell via the tab; and the expanding layer is disposed on the second connecting portion, the expanding layer is located between the second connecting portion and the top cover, and the first connecting portion is connected to the top cover. With such a design, for the connecting piece in the battery, the first connecting portion can be connected to the battery cell and the second connecting portion can be connected to the top cover, or the first connecting portion can be connected to the top cover and the second connecting portion can be connected to the battery cell, which improves flexibility of the safety mechanism in use and increases use scenarios thereof.

According to still another aspect of this application, the embodiments of this application provide an electric apparatus including the foregoing battery.

In the foregoing electric apparatus, because the foregoing safety mechanism is disposed between the battery cell and top cover in the battery, when the fusing portion of the connecting piece fuses, the expanding layer expands to exert a thrust on the connecting portion on which the expanding layer is located, pushing the connecting portion to the position not coplanar with the other connecting portion. This increases the distance between the first connecting portion and the second connecting portion, and makes it difficult for the connecting piece to undergo breakdown, thereby improving the use safety.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic diagram of an overall structure of a safety mechanism according to an embodiment of this application;
FIG. 2 is a cross-sectional view of an overall structure of a battery according to an embodiment of this application;
FIG. 3 is a locally enlarged schematic diagram at A in FIG. 2; and
FIG. 4 is a schematic diagram of a simplified structure of an electric apparatus according to an embodiment of this application.

Reference signs in the specific embodiments are described as follows:
1. electric apparatus; 2. vehicle;
10. battery;
100. safety mechanism; 110. connecting piece; 111. first connecting portion; 112. second connecting portion; 113. fusing portion; 120. expanding layer;
200. battery cell; 210. tab;
300. top cover;
20. controller;
30. motor;
a. first direction; and
b. second direction.

### DESCRIPTION OF EMBODIMENTS

The following clearly and completely describes the technical solutions in the embodiments of this application with reference to the accompanying drawings in the embodiments of this application. Apparently, the described embodiments are only some but not all of the embodiments of this application. All other embodiments obtained by persons of ordinary skill in the art based on the embodiments of this application without creative efforts shall fall within the protection scope of this application.

In the description of this application, it should be understood that the orientations or positional relationships indicated by the terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations, and therefore shall not be construed as any limitations on this application.

In addition, the terms "first" and "second" are merely for the purpose of description, and shall not be understood as any indication or implication of relative importance or any implicit indication of the number of technical features indicated. Therefore, a feature defined by "first" or "second" may explicitly or implicitly include at least one such feature. In the description of this application, "a plurality of" means at least two, for example, two or three, unless otherwise specifically defined.

In this application, unless otherwise specified and defined explicitly, the terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements, unless otherwise explicitly defined. Persons of ordinary skill in the art can understand specific meanings of these terms in this application as appropriate to specific situations.

In this application, unless otherwise specified and defined explicitly, that a first feature is "above" or "below" a second feature may mean that the first and second features are in direct contact or that the first and second features are in indirect contact via an intermediate medium. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

It should be noted that when an element is referred to as being "fixed to" or "disposed on" another element, it may be directly fixed to the another element, or there may be an element therebetween. When an element is referred to as being "connected to" another element, it may be directly connected to the another element, or there may be an element therebetween. The terms "perpendicular", "horizontal", "upper", "lower", "left", "right", and other similar expressions as used herein are for illustration only instead of indicating the only embodiment.

Currently, with the development of technologies, application scenarios of traction batteries are becoming increasingly wide. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, use safety of batteries has gradually become the focus of concern for people.

The applicant has noticed that to improve the use safety of batteries, a safety mechanism is typically disposed inside a battery. When the battery experiences a large current due to faults such as short circuit, the safety mechanism immediately fuses to cut off the circuit connection, avoiding safety accidents. However, when the safety mechanism fuses, the high voltage of the battery cell in the battery still applies to two ends of the safety mechanism. When the two ends of the safety mechanism are too close, the safety mechanism may undergo high-voltage breakdown to cause fire, posing certain safety hazards.

Based on the foregoing considerations, to solve the problem that when the two ends of the safety mechanism are too close, the safety mechanism may undergo high-voltage breakdown to cause fire, posing certain safety hazards, the applicant, through in-depth research, has designed a safety mechanism in which an expanding layer is disposed on a side of a first connecting portion or second connecting portion of a connecting piece close to a fusing portion. In this way, when the fusing portion of the connecting piece fuses, the expanding layer expands to exert a thrust on the connecting portion on which the expanding layer is located, pushing the connecting portion to a position not coplanar with the other connecting portion. This increases a distance between the first connecting portion and the second connecting portion, and makes it difficult for the connecting piece to undergo breakdown, thereby improving the use safety.

The battery disclosed in the embodiments of this application may be used without limitation in electric apparatuses such as vehicles, ships, or aircrafts. The battery disclosed in this application can be used to form a power supply system of the electric apparatus, which is conducive to improving the use safety of the battery. Even if the battery has faults such as short circuit inside, the safety mechanism can cut off the circuit connection in a timely manner, avoiding the problem that the connecting piece in the safety mechanism undergoes high-voltage breakdown to cause fire, thereby eliminating the safety hazards in the battery.

A battery box is configured to provide an accommodating space for a battery module, and the battery box may be of various structures. In some embodiments, the battery box may include a top cover, a bottom plate, and several side plates. The several side plates are connected head to tail. The top cover and the bottom plate are connected to the top and bottom of each side plate, and enclose the accommodating space for accommodating the battery module together with the side plates, that is, the top cover, the bottom plate, and the side plates jointly enclose an accommodating recess. Certainly, the accommodating recess formed by the top cover, the bottom plate, and the side plates may be of various shapes, for example, a cylinder or a cuboid.

The battery cell is a smallest element constituting a battery. In the battery, the battery cell may be provided in plurality, and the plurality of battery cells may be connected in series, parallel, or series-parallel, where being connected in series-parallel means a combination of series and parallel connections of the plurality of battery cells. The plurality of battery cells may be directly connected in series, parallel, or series-parallel to form a battery which is accommodated in the battery box; or certainly, the plurality of battery cells may be connected in series, parallel, or series-parallel first to form a battery module, and then a plurality of battery modules are connected in series, parallel, or series-parallel to form a battery pack which is accommodated in the battery box. The battery may further include other structures. For example, the battery may further include a busbar configured to implement electrical connection between the plurality of battery cells. Each battery cell may be a secondary battery or a primary battery, and may be a lithium-sulfur battery, a sodium-ion battery, or a magnesium-ion battery, without being limited thereto. The battery cell may be cylindrical, flat, cuboid, or of other shapes.

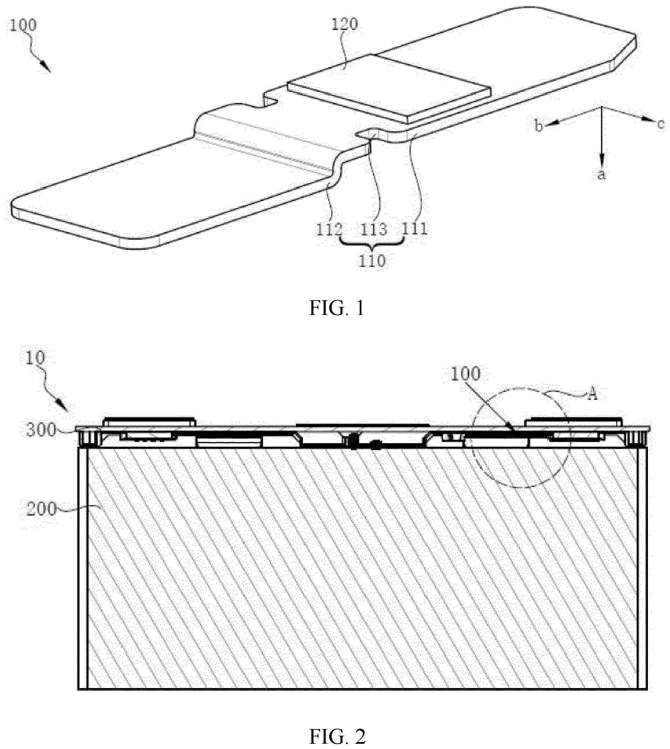

According to some embodiments of this application, referring to FIG. 1, FIG. 1 shows an overall structure of a safety mechanism 100 according to an embodiment of this application.

This embodiment of this application provides a safety mechanism 100. The safety mechanism 100 includes a connecting piece 110 and an expanding layer 120. The connecting piece 110 includes a first connecting portion 111, a fusing portion 113, and a second connecting portion 112 that are connected in sequence. The expanding layer 120 is disposed on a side of the first connecting portion 111 or the second connecting portion 112 in a first direction a and located at a position of the first connecting portion 111 or the second connecting portion 112 close to the fusing portion 113, where the first direction a is a thickness direction of the connecting piece 110.

The connecting piece 110 is a portion of the safety mechanism 100 for implementing electrical connection, and the connecting piece 110 may be made of a conductive material such as metal. Specifically, the connecting piece 110 includes the first connecting portion 111, the fusing portion 113, and the second connecting portion 112 that are connected in sequence, and the first connecting portion 111 and the second connecting portion 112 are configured to be connected to different components or assemblies respectively. Because the connecting piece 110 itself can conduct electricity, the components or assemblies respectively connected to the first connecting portion 111 and the second connecting portion 112 are electrically connected through the connecting piece 110. The fusing portion 113 is provided between the first connecting portion 111 and the second connecting portion 112. In the case of a large current in the loop due to faults such as short circuit, the fusing portion 113 can fuse to disconnect the connection between the first connecting portion 111 and the second connecting portion 112, so as to cut off the circuit connection, avoiding safety accidents. For example, the principle of the fusing portion 113 fusing may be that in the case of a large current in the loop, resistance of the fusing portion 113 increases to generate heat, leading to fusing of the fusing portion 113. The shapes, sizes, and the like of the first connecting portion 111, the fusing portion 113, and the second connecting portion 112 are subject to their use requirements, and are not particularly limited herein. The first connecting portion 111, the fusing portion 113, and the second connecting portion 112 may be integrally formed, or may be connected in sequence through a connecting member.

The expanding layer 120 is disposed on the side of the first connecting portion 111 or the second connecting portion 112 in the first direction a, where the first direction a is the thickness direction of the connecting piece 110. In other words, the expanding layer 120 is disposed on a surface of the first connecting portion 111 or the second connecting portion 112 in the first direction a and is supported by the first connecting portion 111 or the second connecting portion 112. When the fusing portion 113 of the connecting piece 110 does not fuse such that the entire connecting piece 110 remains in a connected state, the connecting piece 110 and the expanding layer 120 abut against each other. When the fusing portion 113 of the connecting piece 110 fuses, the connection between the first connecting portion 111 and the second connecting portion 112 is disconnected, and the expanding layer 120 can expand to exert a thrust on the connecting portion on which the expanding layer 120 is located, pushing the connecting portion along the first direction a to a position not coplanar with the other connecting portion. This increases a distance between the first connecting portion 111 and the second connecting portion 112, and makes it difficult for the connecting piece 110 to undergo breakdown, thereby improving use safety. It should be noted that the expanding layer 120 is made of a material capable of expanding, and its shape and size are not particularly limited.

In the foregoing safety mechanism 100, the expanding layer 120 is disposed on the side of the first connecting portion 111 or second connecting portion 112 of the connecting piece 110 close to the fusing portion 113. In this way, when the fusing portion 113 of the connecting piece 110 fuses, the expanding layer 120 expands to exert a thrust on the connecting portion on which the expanding layer 120 is located, pushing the connecting portion to the position not coplanar with the other connecting portion. This increases the distance between the first connecting portion 111 and the second connecting portion 112, and makes it difficult for the connecting piece 110 to undergo breakdown, thereby improving the use safety.

In some embodiments, the expanding layer 120 is configured to be capable of increasing in volume in response to absorption of fluid.

The expanding layer 120 can have various expanding principles. For example, in some embodiments, the expanding layer 120 is configured to be capable of increasing in volume in response to absorption of fluid. The safety mechanism 100 in these embodiments can be applied in a battery. When a battery cell in the battery is damaged and an electrolyte in the battery cell leaks, resulting in short circuit inside the battery, the fusing portion 113 of the connecting piece 110 fuses in response to a large current in the loop. Simultaneously, the expanding layer 120 absorbs the leaked electrolyte to increase in volume and expand, and exerts a thrust on the connecting portion on which the expanding layer 120 is located, pushing the connecting portion along the first direction a to the position not coplanar with the other connecting portion, thereby increasing the distance between the first connecting portion 111 and the second connecting portion 112.

Such a design allows the expanding layer 120 to absorb fluid to expand. When the safety mechanism 100 is applied in the battery, the expanding layer 120 can absorb the electrolyte inside the battery to increase in volume and expand, resulting in more convenient application and more timely expansion of the expanding layer 120.

In some embodiments, a projection of the expanding layer 120 on a surface of the connecting piece 110 in the first direction a is entirely located in the connecting piece 110.

The shapes, sizes, and the like of the connecting piece 110 and the expanding layer 120 are not particularly limited. To allow the expanding layer 120 to exert a more uniform thrust on the connecting portion on which the expanding layer 120 is located after expanding, in some embodiments, the projection of the expanding layer 120 on the surface of the connecting piece 110 in the first direction a is entirely located in the connecting piece 110. In addition, because the expanding layer 120 is disposed on the surface of the first connecting portion 111 or the second connecting portion 112 in the first direction a, the expanding layer 120 entirely falls within the range of the connecting piece 110 in the first direction a.

The projection of the expanding layer 120 on the surface of the connecting piece 110 in the first direction a is entirely located in the connecting piece 110, such that the entire expanding layer 120 is supported by the connecting piece 110, and when the expanding layer 120 expands, the thrust it exerts on the connecting piece 110 is more uniform.

In some embodiments, a minimum distance between the expanding layer 120 and the fusing portion 113 is not less than 1 millimeter (mm).

During use of the safety mechanism 100, the fusing portion 113 fuses, causing the expansion of the expanding layer 120. Therefore, to prevent mutual interference during their operation, it is advisable to maintain a specific distance between the fusing portion 113 and the expanding layer 120. For example, in some embodiments, the minimum distance between the expanding layer 120 and the fusing portion 113 is set to be not less than 1 mm, which means that at the closest position between the expanding layer 120 and the fusing portion 113, a distance of 1 mm or above is maintained.

Such a design leaves a certain distance between the expanding layer 120 and the fusing portion 113 of the connecting piece 110, preventing the fusing portion 113 after fusing from affecting normal use of the expanding layer 120.

In some embodiments, thickness of the expanding layer 120 in the first direction a is not less than 0.2 mm.

During expanding of the expanding layer 120, the expanding layer 120 increases in volume and expands along the thickness direction, namely, the first direction a. Therefore, to allow the expanding layer 120 to expand sufficiently to push the connecting portion after expanding, for example, in some embodiments, the thickness of the expanding layer 120 is not less than 0.2 mm, that is, the thickness of the expanding layer 120 is 0.2 mm or above.

The thickness of the expanding layer 120 being set to be not less than 0.2 mm allows the expanding layer 120 to expand sufficiently to push the connecting portion after expanding, improving use effects of the expanding layer 120.

In some embodiments, size of the expanding layer 120 in a second direction b is not less than 5 mm; and/or size of the expanding layer 120 in a third direction c is not less than 5 mm; where the second direction b and the third direction c intersect with each other and are both perpendicular to the first direction a.

A relative size relationship between the expanding layer 120 and the connecting portion needs to be maintained within an appropriate range. Therefore, the size of the expanding layer 120 can be neither too large nor too small. For example, the size of the expanding layer 120 in the second direction b may be set to be not less than 5 mm, or the size of the expanding layer 120 in the third direction c may be set to be not less than 5 mm, or the sizes of the expanding layer 120 in the second direction b and the third direction c may be both set to be not less than 5 mm. The second direction b and the third direction c are two directions intersecting with each other in a plane perpendicular to the first direction a. For example, as shown in FIG. 1, the second direction b may be a length direction of the expanding layer 120 in the plane perpendicular to the first direction a, and the third direction c may be a width direction of the expanding layer 120 in the plane perpendicular to the first direction a. It should be noted that the size of the expanding layer 120 in the second direction b and/or the third direction c being not less than 5 mm does not mean that the shape of the expanding layer 120 in the plane perpendicular to the first direction a must be rectangular, and the shape may alternatively be polygonal, circular, or irregular.

Such a design allows the expanding layer 120 to maintain sufficient contact area with the connecting portion in both the second direction b and the third direction c, ensuring that the expanding layer 120 can push the connecting portion to the desired position after expanding.

In some embodiments, the expanding layer 120 includes an expanding glue layer capable of absorbing fluid.

The expanding layer 120 may be a multi-layer structure formed by a plurality of layers of materials stacked or a single-layer structure formed by a single material. For example, the expanding layer 120 includes the expanding glue layer capable of absorbing fluid. A water-absorbing material of an expanding glue contains a sufficient amount of hydrophilic groups or substances. When the material comes into contact with water, water molecules enter the material through surface adsorption, capillary action and diffusion, and the like, and form a strong bonding force with the hydrophilic groups or substances in the material. As water molecules continue to increase, the material expands and deforms.

The expanding layer 120 being made using the expanding glue layer capable of absorbing fluid facilitates processing and shaping of the expanding layer 120, reducing manufacturing costs of the expanding layer 120.

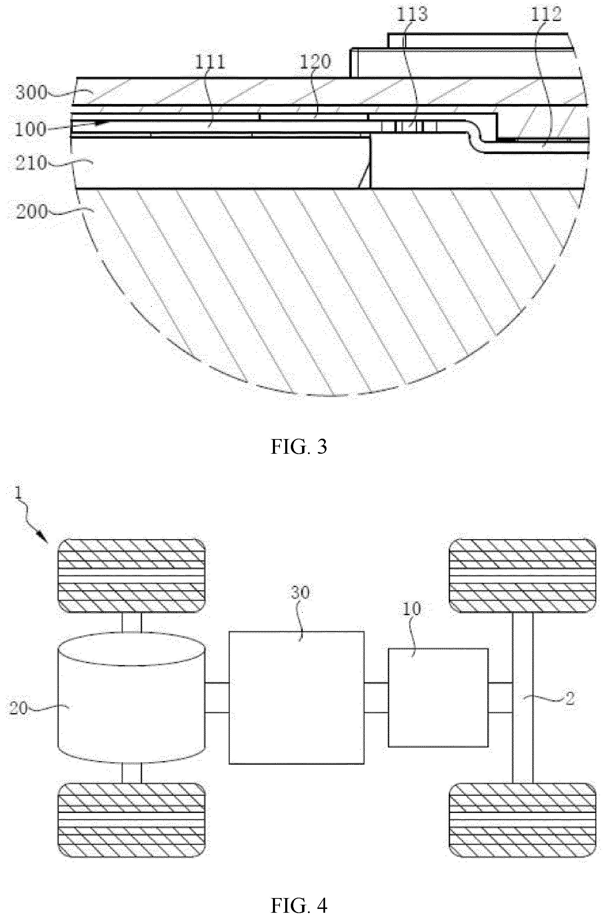

FIG. 2 shows an overall cross-sectional structure of a battery cell 200 according to an embodiment of this application, and FIG. 3 shows a locally enlarged structure at A in FIG. 2.

According to another aspect of this application, referring to FIG. 2 and FIG. 3, an embodiment of this application provides a battery 10. The battery 10 includes a battery cell 200, a top cover 300, and the foregoing safety mechanism 100, where the top cover 300 is disposed opposite and spaced apart from the battery cell 200, the safety mechanism 100 is disposed between the battery cell 200 and the top cover 300, one of the first connecting portion 111 and the second connecting portion 112 is connected to the battery cell 200, and the other of the first connecting portion 111 and the second connecting portion 112 is connected to the top cover 300.

The battery cell 200 is a smallest element constituting the battery 10. The top cover 300 is part of the battery 10 box, and the battery 10 box has an accommodating space for accommodating the battery cell 200. The battery cell 200 is disposed in the accommodating space, and disposed opposite and spaced apart from the top cover 300. The safety mechanism 100 is disposed between the battery cell 200 and the top cover 300. In the connecting piece 110 of the safety mechanism 100, the first connecting portion 111 is connected to the battery cell 200 and the second connecting portion 112 is connected to the top cover 300, or the first connecting portion 111 is connected to the top cover 300 and the second connecting portion 112 is connected to the battery cell 200. The expanding layer 120 of the safety mechanism 100 is disposed between the connecting piece 110 and the top cover 300 or between the connecting piece 110 and the battery cell 200.

In the foregoing battery 10, because the foregoing safety mechanism 100 is disposed between the battery cell 200 and the top cover 300, when the fusing portion 113 of the connecting piece 110 fuses, the expanding layer 120 expands to exert a thrust on the connecting portion on which the expanding layer 120 is located, pushing the connecting portion to the position not coplanar with the other connecting portion. This increases the distance between the first connecting portion 111 and the second connecting portion 112, and makes it difficult for the connecting piece 110 to undergo breakdown, thereby improving the use safety.

In some embodiments, a tab 210 is provided on a side of the battery cell 200 facing the top cover 300, and the first connecting portion 111 is connected to the battery cell 200 via the tab 210; and the expanding layer 120 is disposed on the first connecting portion 111, the expanding layer 120 is located between the first connecting portion 111 and the top cover 300, and the second connecting portion 112 is connected to the top cover 300. Alternatively, a tab 210 is provided on a side of the battery cell 200 facing the top cover 300, and the second connecting portion 112 is connected to the battery cell 200 via the tab 210; and the expanding layer 120 is disposed on the second connecting portion 112, the expanding layer 120 is located between the second connecting portion 112 and the top cover 300, and the first connecting portion 111 is connected to the top cover 300.

For example, the battery cell 200 is further provided with a tab 210, where the tab 210 is a metal conductor that leads positive and negative electrodes out of the battery cell 200. The first connecting portion 111 of the connecting piece 110 is connected to the battery cell 200 via the tab 210, and the second connecting portion 112 of the connecting piece 110 is connected to the top cover 300 and more specifically, the second connecting portion 112 is connected to a tab 210 post beneath the top cover 300, so the battery cell 200 can conduct electricity via the tab 210, the connecting piece 110, and the tab 210 post. Alternatively, in some other embodiments, the first connecting portion 111 of the connecting piece 110 is connected to the top cover 300 and more specifically, the first connecting portion 111 is connected to a tab 210 post beneath the top cover 300, and the second connecting portion 112 of the connecting piece 110 is connected to the battery cell 200 via the tab 210. Similarly, the battery cell 200 conducts electricity via the tab 210, the connecting piece 110, and the tab 210 post.

With such a design, for the connecting piece 110 in the battery 10, the first connecting portion 111 can be connected to the battery cell 200 and the second connecting portion 112 can be connected to the top cover 300, or the first connecting portion 111 can be connected to the top cover 300 and the second connecting portion 112 can be connected to the battery cell 200, which improves flexibility of the safety mechanism 100 in use and increases use scenarios thereof.

According to still another aspect of this application, referring to FIG. 4, FIG. 4 shows a simplified structure of an electric apparatus 1 according to an embodiment of this application. This embodiment of this application provides an electric apparatus 1, where the electric apparatus 1 includes the foregoing battery 10. The electric apparatus 1 in this embodiment of this application uses the battery 10 as a power source. The electric apparatus 1 may be but is not limited to a mobile phone, a tablet, a notebook computer, an electric toy, an electric tool, an electric bicycle, an electric vehicle, a ship, or a spacecraft. The electric vehicle may be a battery electric vehicle, a hybrid electric vehicle, an extended-range electric vehicle, or the like.

For example, a vehicle 2 being the electric apparatus 1 is used as an example for description below, where the vehicle 2 is provided with the battery 10 inside, and the battery 10 may be disposed at the bottom, front, or rear of the vehicle 1. The battery 10 can be configured to supply power to the vehicle 2 as an operational power source or a driving power source for the vehicle 2 or as both an operational power source and a driving power source for the vehicle 2. For example, the battery 10 is configured to satisfy power needs of start, navigation, and driving of the vehicle 2. The vehicle 2 may further include a controller 20 and a motor 30. The battery 10 supplies power to the controller 20, the controller 20 is configured to control the battery 10 to supply power to the motor 30, and the motor 30 receives and uses the power of the battery 10 and is connected to wheels through a transmission mechanism to drive the vehicle 2 to move, replacing or partially replacing fossil fuel or natural gas to provide driving traction for the vehicle 2.

In the foregoing electric apparatus 1, because the foregoing safety mechanism is disposed between the battery cell and top cover in the battery 10, when the fusing portion of the connecting piece fuses, the expanding layer expands to exert a thrust on the connecting portion on which the expanding layer is located, pushing the connecting portion to the position not coplanar with the other connecting portion. This increases the distance between the first connecting portion and the second connecting portion, and makes it difficult for the connecting piece to undergo breakdown, thereby improving the use safety.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that persons of ordinary skill in the art may further make several modifications and improvements without departing from the concept of this application, and these modifications and improvements also fall within the protection scope of this application. Therefore, the protection scope of this application patent should be subject to the appended claims.

## Claims

1. A safety mechanism, comprising:
a connecting piece comprising a first connecting portion, a fusing portion, and a second connecting portion that are connected in sequence; and
an expanding layer disposed on a side of the first connecting portion or the second connecting portion in a first direction and located at a position of the first connecting portion or the second connecting portion close to the fusing portion;
wherein the first direction is a thickness direction of the connecting piece.

2. The safety mechanism according to claim 1, wherein the expanding layer is configured to be capable of increasing in volume in response to absorption of fluid.

3. The safety mechanism according to claim 1 or 2, wherein a projection of the expanding layer on a surface of the connecting piece in the first direction is entirely located in the connecting piece.

4. The safety mechanism according to any one of claims 1 to 3, wherein a minimum distance between the expanding layer and the fusing portion is not less than 1 mm.

5. The safety mechanism according to any one of claims 1 to 4, wherein thickness of the expanding layer in the first direction is not less than 0.2 mm.

6. The safety mechanism according to any one of claims 1 to 5, wherein size of the expanding layer in a second direction is not less than 5 mm; and/or
size of the expanding layer in a third direction is not less than 5 mm;
wherein the second direction and the third direction intersect with each other and are both perpendicular to the first direction.

7. The safety mechanism according to any one of claims 1 to 6, wherein the expanding layer comprises an expanding glue layer capable of absorbing fluid.

8. A battery, comprising:
a battery cell;
a top cover disposed opposite and spaced apart from the battery cell; and
the safety mechanism according to any one of claims 1 to 7, disposed between the battery cell and the top cover, wherein one of the first connecting portion and the second connecting portion is connected to the battery cell, and the other of the first connecting portion and the second connecting portion is connected to the top cover.

9. The battery according to claim 8, wherein a tab is provided on a side of the battery cell facing the top cover, and the first connecting portion is connected to the battery cell via the tab; and
the expanding layer is disposed on the first connecting portion, the expanding layer is located between the first connecting portion and the top cover, and the second connecting portion is connected to the top cover.

10. The battery according to claim 8, wherein a tab is provided on a side of the battery cell facing the top cover, and the second connecting portion is connected to the battery cell via the tab; and
the expanding layer is disposed on the second connecting portion, the expanding layer is located between the second connecting portion and the top cover, and the first connecting portion is connected to the top cover.

11. An electric apparatus, comprising:
the battery according to any one of claims 8 to 10.
